# EUROPEAN PATENT APPLICATION

(11) **EP 2 315 134 A1**
(43) Date of publication of application: **27.04.2011**
(21) Application number: 08877383.3
(22) Date of filing: 14.10.2008
(51) Int. Cl.: G06F 17/30

(54) **SEARCH DEVICE, SEARCH INDEX CREATING DEVICE, AND SEARCH SYSTEM**

(71) Applicant: Mitsubishi Electric Corporation, Tokyo 100-8310 (JP)
(72) Inventor: OKATO, Yohei, Tokyo 100-8310 (JP); HANAZAWA, Toshiyuki, Tokyo 100-8310 (JP)
(74) Representative: Pfenning, Meinig & Partner GbR
(86) International application number: PCT/JP2008/002898
(87) International publication number: WO 2010/044123

(57) **Abstract**

A search device includes a partial character string extracting unit 22 for acquiring partial character strings for search from a search query inputted, a partial character string searching unit 23 for acquiring name text candidates and pieces of partial character string appearance position information respectively showing appearance positions of the partial character strings within the name text candidates according to the partial character strings for search, a candidate counting unit 24 for counting an accumulated score for each of the name text candidates by providing consistency among the appearance positions of the partial character strings within the name text candidates in consideration of the pieces of partial character string appearance position information in such a way that the appearance positions do not overlap one another in each of the name text candidates, a candidate-to-be-presented selecting unit 25 for determining a candidate to be presented according to the accumulated score, and a candidate presentation unit 26 for presenting the candidate to be presented.

## Description

### Field of the Invention

The present invention relates to a search device, a search index creating device, and a search system which can search for a character string associated with a search word inputted thereto, especially a search word including fuzziness, with a high degree of precision.

### Background of the Invention

Conventionally, a method of creating indices having, as keys, partial character strings in each of which a match between an ID of a name which can be as a search object and a partial character string included in the name is described in advance, and carrying out a fuzzy word search at a high speed with reference to these indices is known. According to a fuzzy name search technology disclosed by patent reference 1, a fuzzy word search is carried out by decomposing a search string into partial character strings each having a length of "2", and adding one point to the score of each name including one of the partial character strings. In addition, a search method of developing the notation and reading of a search character string to search for the search string by using partial character strings each having a length of "1", thereby taking the fuzziness of the notation and reading into consideration is disclosed. For example, as for the following name: " 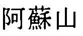 (asosan)", the fuzziness is absorbed by additionally setting, as search objects, " 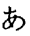 (a) ", " 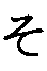 (so) ", " 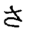 (sa) ", " 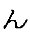 (n)", " 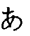 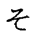 (aso) ", " 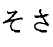 (sosa) ", and " 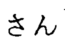 (san) ", which are partial character strings of the reading " 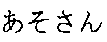 (asosan) ", and " 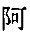 ", " 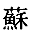 " and " 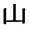 ".

Furthermore, in order to provide a high degree of reproducibility for search methods in consideration of an input having fuzziness, such as OCR and voice recognition, development of a search character string into possible candidates in consideration of misrecognition has been studied. At this time, because the index size becomes very large when a search character string is developed into possible candidates in consideration of misrecognition which is assumed to be performed on indices, according to a technology disclosed by patent reference 2, a document vector is created by using correct answer word candidates acquired by statistically determining if each word of the voice recognition result of a voice document is outputted correctly as an error of which word, thereby increasing the degree of similarity with the user's search query not existing in the words recognized using voice recognition, and improving the degree of reproducibility of the search.

Furthermore, according to a technology disclosed by patent reference 3, characters are divided into similar character groups in advance according to their morphological similarities, and a character code is converted into characters each representing one of the similar character groups so as to search for a similar document, thereby improving the accuracy of determination of whether or not the character code is similar to a document for misrecognition, and improving the degree of reproducibility of the search.
In addition, according to a technology disclosed by patent reference 4, for a text containing one or more parts having fuzziness, each of the one or more fuzzy parts is developed into a possible candidate, and feature information is extracted from the text into which each of the one or more fuzzy parts is developed to select a combination of candidates for each of the fuzzy parts by using this feature information.

Patent reference 1: Patent No. 3665112
Patent reference 2: JP,2004-348552,A
Patent reference 3: JP,2007-48061,A
Patent reference 4: JP,2007-58415,A

Because conventional searches for a name including fuzziness are configured as above, a conventional search disclosed by patent reference 1 does not take into consideration exclusivity in the case of development of a reading. For example, in a case in which the input is " 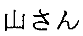 (yamasan) ", names having " 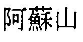 (asosan)" as their entry words and names having " 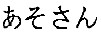 (asosan)" as their entry words show 100% of matching degree. A problem is that these search results cause the user to have a strong feeling that something is abnormal, and the addition of these candidates reduces the validity of the candidates which are presented to the user as search results. Although this problem can be avoided if developed names are added separately, this case presents a problem of increasing the index size in proportion to the increase in the number of registered names.

Particularly, when the input search word is a voice recognition result, addition of a reading to the voice recognition result causes fuzziness due to fluctuations of utterance based on pronunciation, such as a lengthening of a diphthong, vocalization of an unvoiced (or voiceless) consonant, and devocalization of a voiced consonant. A lengthening of a diphthong shows that diphthongs (/ou/, /ei/) have a property of easily being pronounced like a continuation (/oo/, /ee/) of the preceding (or first) vowel in a specific context. For example, " 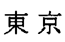 (Tokyo)" having a reading of "toukyou" is pronounced more close to "tookyoo" than the reading. There is a case in which such a lengthening of a diphthong does not occur when not only a phoneme arrangement but also a linguistic context are taken into consideration. For example, in a case of " 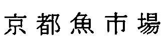 (Kyoto fish market)" having a reading of "kyoutouoichiba", while the diphthong of "kyou" may be lengthened like "kyoo", the diphthong of "tou" is not lengthened like "too".

Similarly, in the case of vocalization of an unvoiced consonant and in the case of devocalization of a voiced consonant, a voiceless sound may become a voiced sound lacking of clarity and a voiced sound may become a voiceless sound having clarity according to the context. For example, there is case in which " 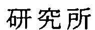 (research institute)" having a reading of "kenkyujyo" is pronounced like "kenkyusho".
When each of such names as this example is developed into a plurality of candidates to create indices, the index size increases by several times or more because the index size is generally proportional to the number of variations of the name which are added by the development.

Furthermore, a problem with the technology disclosed by patent reference 2 is that because a document vector is created by using correct answer word candidates which are determined statistically, the processing time required to create the document vector is needed. A problem with the technology disclosed by patent reference 3 is that because "tou" and "too" are handled collectively while no distinction is made between them, for example, by grouping characters in advance according to their morphological similarities, the index size does not increase while the search accuracy decreases because expressions distinguishable according to their contexts are put together as mentioned above. On the other hand, as shown in patent reference 4, a problem with the case of development of each fuzzy part of the inputted text into two or more possible candidates is that the processing time proportional to the number of the input text is needed.

The present invention is made in order to solve the above-mentioned problems, and it is therefore an object of the present invention to provide a search device, a search index creating device, and a search system which suppress the increase in the index size and the amount of arithmetic operation at the time of making a search, and also improve the search accuracy when making a search in consideration of fuzziness.

### Description of the Invention

In accordance with the present invention, there is provided a search device including: an input unit for acquiring a search query; a partial character string extracting unit for acquiring partial character strings for search from the above-mentioned search query; a partial character string searching unit for acquiring name text candidates and pieces of partial character string appearance position information respectively showing appearance positions of the partial character strings within the above-mentioned name text candidates according to the above-mentioned partial character strings for search; a candidate counting unit for counting an accumulated score for each of the above-mentioned name text candidates by providing consistency among the appearance positions of the above-mentioned partial character strings within the above-mentioned name text candidates in consideration of the above-mentioned pieces of partial character string appearance position information in such a way that the appearance positions do not overlap one another in each of the above-mentioned name text candidates; a candidate-to-be-presented selecting unit for determining a candidate to be presented according to the above-mentioned accumulated score; and a candidate presentation unit for presenting the above-mentioned candidate to be presented.

Because the search device in accordance with the present invention is constructed in such a way as to include the candidate counting unit for counting the accumulated score for each of the name text candidates by providing consistency among the appearance positions of the partial character strings within the name text candidates in consideration of the pieces of partial character string appearance position information in such a way that the appearance positions do not overlap one another in each of the name text candidates, the candidate-to-be-presented selecting unit for determining a candidate to be presented according to the accumulated score, and the candidate presentation unit for presenting the candidate to be presented, the search device in accordance with the present invention can improve the search accuracy when making a search in consideration of fuzziness. Furthermore, the search device can suppress the increase in the size of the partial character string indices and the amount of arithmetic operation at the time of making a search.

### Brief Description of the Figures

[Fig. 1] Fig. 1 is a block diagram showing the structure of a search system in accordance with Embodiment 1;
[Fig. 2] Fig. 2 is a view showing an example of a name database in accordance with Embodiment 1;
[Fig. 3] Fig. 3 is a block diagram showing the structure of an index creating device in accordance with Embodiment 1;
[Fig. 4] Fig. 4 is a view showing an example of word information which a dictionary for language analyses in accordance with Embodiment 1 has;
[Fig. 5] Fig. 5 is a view showing an example of a language rule which the dictionary for language analyses in accordance with Embodiment 1 has;
[Fig. 6] Fig. 6 is a view showing an example of a directed graph which a name developing unit in accordance with Embodiment 1 creates;
[Fig. 7] Fig. 7 is a view showing an example of partial character string information which a partial character string extracting unit in accordance with Embodiment 1 extracts;
[Fig. 8] Fig. 8 is a view showing an example of partial character string indices in accordance with Embodiment 1;
[Fig. 9] Fig. 9 is a block diagram showing the structure of a search device in accordance with Embodiment 1 of the present invention;
[Fig. 10] Fig. 10 is a flow chart showing the operation of the search device in accordance with Embodiment 1;
[Fig. 11] Fig. 11 is a view showing an example of development of synonymous words by a name developing unit in accordance with Embodiment 1;
[Fig. 12] Fig. 12 is a block diagram showing the structure of a search device in accordance with Embodiment 2;
[Fig. 13] Fig. 13 is a view showing an example of a directed graph which the name developing unit in accordance with Embodiment 2 creates;
[Fig. 14] Fig. 14 is a view showing an example of partial character string information which a partial character string extracting unit in accordance with Embodiment 2 extracts; and [Fig. 15] Fig. 15 is a flow chart showing the operation of the search device in accordance with Embodiment 2.

### Preferred Embodiments of the Invention

Hereafter, in order to explain this invention in greater detail, the preferred embodiments of the present invention will be described with reference to the accompanying drawings. Embodiment 1.

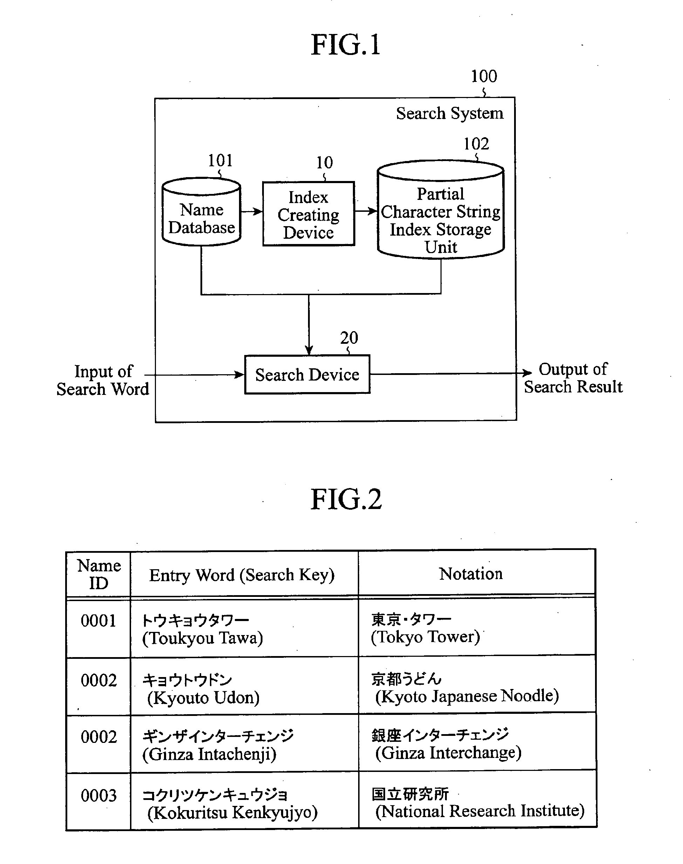

Fig. 1 is a block diagram showing the structure of a search system in accordance with Embodiment 1 of the present invention.
The search system 100 is comprised of an index creating device (a search index creating device) 10, a search device 20, a name database 101, and a partial character string index storage unit 102.
The index creating device 10 creates partial character string indices in advance according to name texts each of which is stored in the name database 101 and each of which can be a search object. The search device 20 computes and outputs a search result candidate according to a search word inputted thereto by using the partial character indices stored in the partial character string index storage unit 102.

The name database 101 registers information about the name texts each of which can be a search object therein. Each piece of registered information is comprised of a recognizable name ID of a name text, and an entry word showing the character string of the name text. Each piece of registered information can further include a notation including a Chinese character, an alphabet, a number, a symbol or the like corresponding to the entry word. Fig. 2 is a view showing an example of the information registered in the name database 101. The partial character string index storage unit 102 stores the partial character string indices created by the index creating device 10.

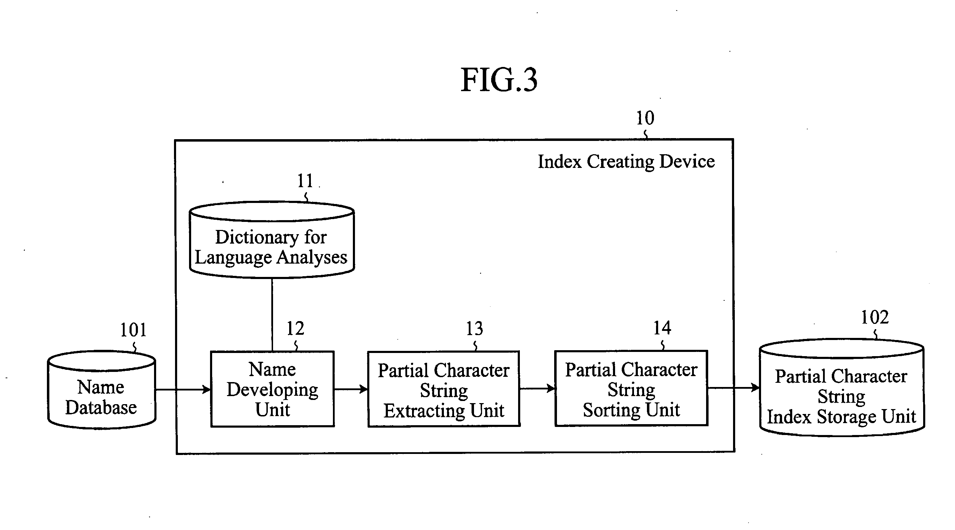

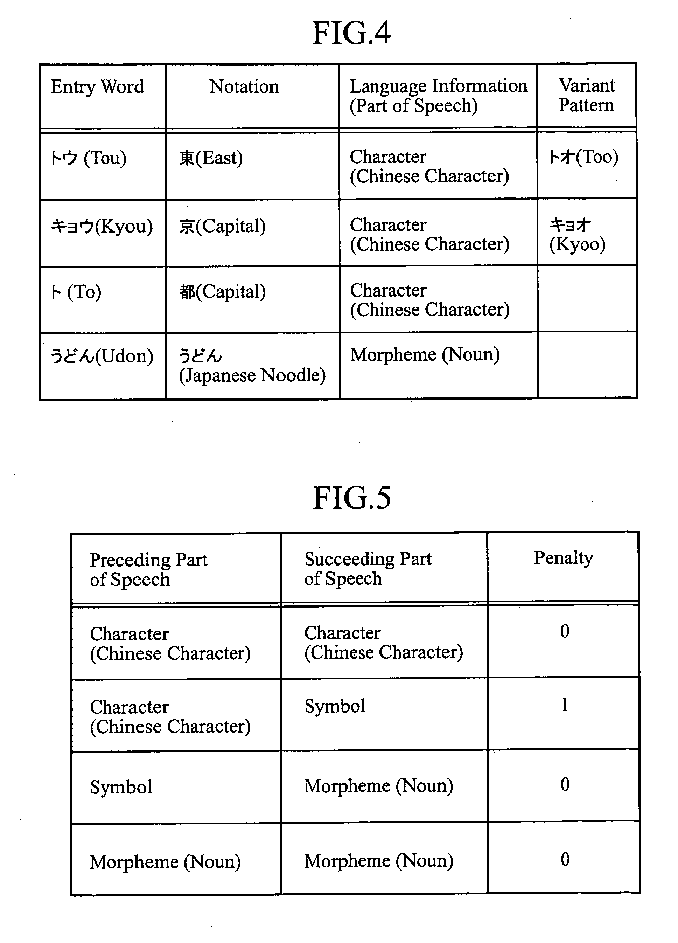

Fig. 3 is a block diagram showing the structure of the index creating device in accordance with Embodiment 1 of the present invention.
The index creating device 10 is comprised of a dictionary 11 for language analyses, a name developing unit 12, a partial character string extracting unit 13, and a partial character string sorting unit 14. The dictionary 11 for language analyses is used when the index creating device carries out a language analysis to extract a variant of an entry word, and has a language rule which is used to couple word information and a word. Fig. 4 shows an example of word information registered in the dictionary for language analyses, and Fig. 5 shows an example of the language rule.

As shown in Fig. 4, an entry word acquirable from the name database 101, a notation corresponding to this entry word, language information, such as the part of speech of the entry word, and a variant pattern showing a notation variation are registered as each piece of word information. Each word should just include a reading and a notation at least one of which has one or more characters, and is not limited to a word having linguistic meaning. The variant pattern has a reading of the same length as the reading of the original entry word. Furthermore, as shown in Fig. 5, parts of speech which are information required for analyses, and knowledge used for coupling words (connection possibility which are shown by a preceding part of speech, a succeeding part of speech, etc., and penalty) are registered as the language rule.

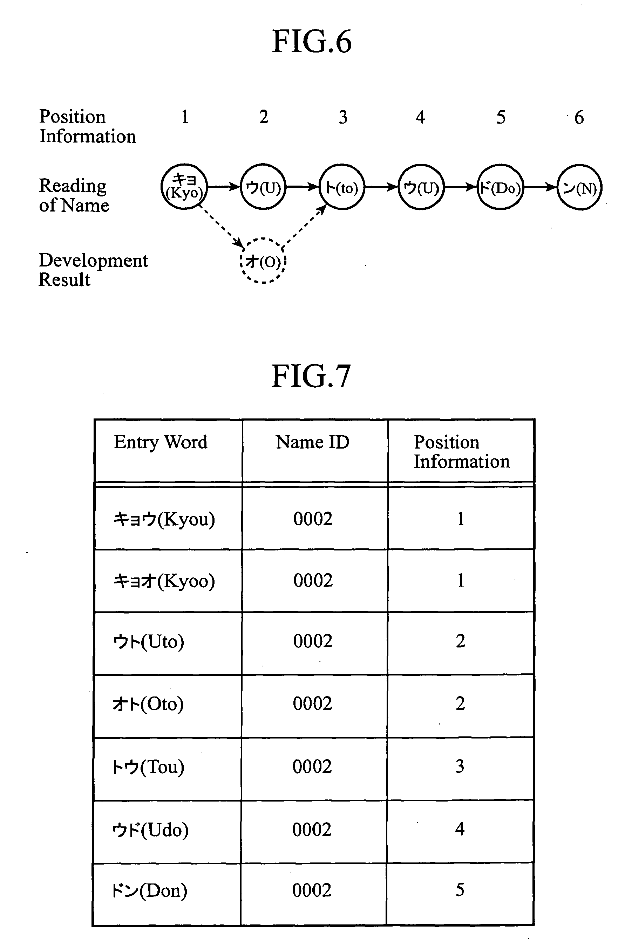

The name developing unit 12 reads one name text from the name database 101, and refers to the dictionary 11 for language analyses to create a standby expression (an expression graph) shown by a directed graph consists of a node showing the head position of the reading of the name text and nodes showing position information (appearance position information) about the positions of elements of the reading which are aligned, and arcs showing a connection relation among those nodes. Fig. 6 shows an example of a directed graph which is created by the name developing unit. In the example of Fig. 6, a directed graph which the name developing unit creates by applying the variant pattern 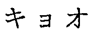 " (kyoo) " to the entry word " 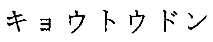 (kyoutoudon)" of the name text having the name ID of 0002 of the name database 101 shown in Fig. 2 and then developing the long vowel in two different possible patters is shown. Each of the nodes constituting the directed graph is a syllable corresponding to one character. Furthermore, each long vowel is expressed as a vowel, and, because contracted sounds " 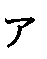 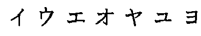 (small Japanese characters)" and a geminated consonant " 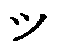 (small Japanese character)" are not pronounced independently, two characters including one of them and one character in front of the one are defined collectively as one unit (one node).

The partial character string extracting unit 13 extracts partial character strings from the directed graph having a standby expression which is inputted from the name developing unit 12, and also creates partial character string information including position information corresponding to each of the partial character strings in addition to the partial character strings. Fig. 7 shows an example of the partial character string information which is created by the partial character string extracting unit. In the example of Fig. 7, each of the partial character strings has a fixed length of two syllables, and entry words are acquired by extracting two syllables one after another from a node of the directed graph by shifting the node by one syllable in a direction from the head of the directed graph to the tail of the directed graph and a match of each of the entry words with the corresponding name ID and the corresponding position information about the position of the entry word in the name text is established. The number of syllables included in each of the partial character strings can be set up according to conditions suitable for the search device.

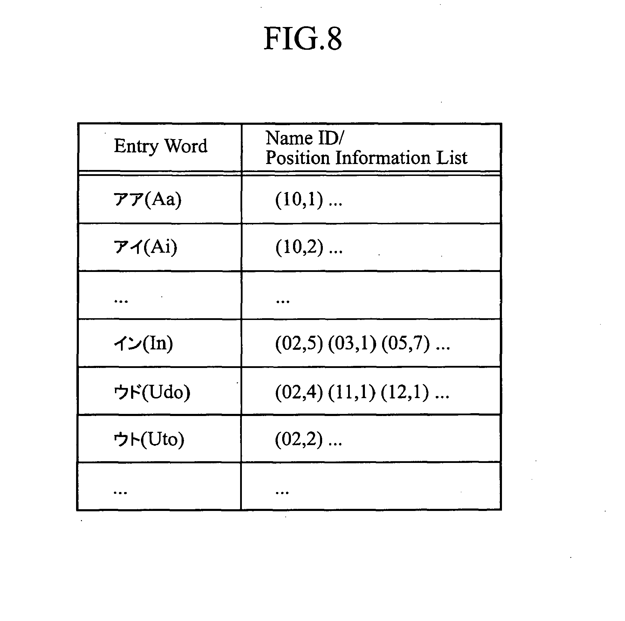

The partial character string sorting unit 14 sorts the list of plural sets of a name ID and a piece of position information according to the partial character string information inputted thereto from the partial character string extracting unit 13. In addition, the partial character string sorting unit creates a list of plural pieces of information each of which consists of the entry word of a partial character string, and a name ID and a piece of position information corresponding to the entry words, and outputs the list to the partial character string index storage unit 102 as partial character string indices. Fig. 8 shows an example of the partial character string indices which are created by the partial character string sorting unit. In the example of Fig. 8, partial character string indices each of which consist of a combination of one of the entry words of partial character strings which are sorted in Japanese phonetic (a-i-u-e-o) order, and a name ID/position information list corresponding to the entry word are shown.
By making a search with reference to the partial character string indices created in advance as mentioned above, the search device can acquire a name candidate matching the search result in a very short time as compared with the case of scanning through the name database itself.

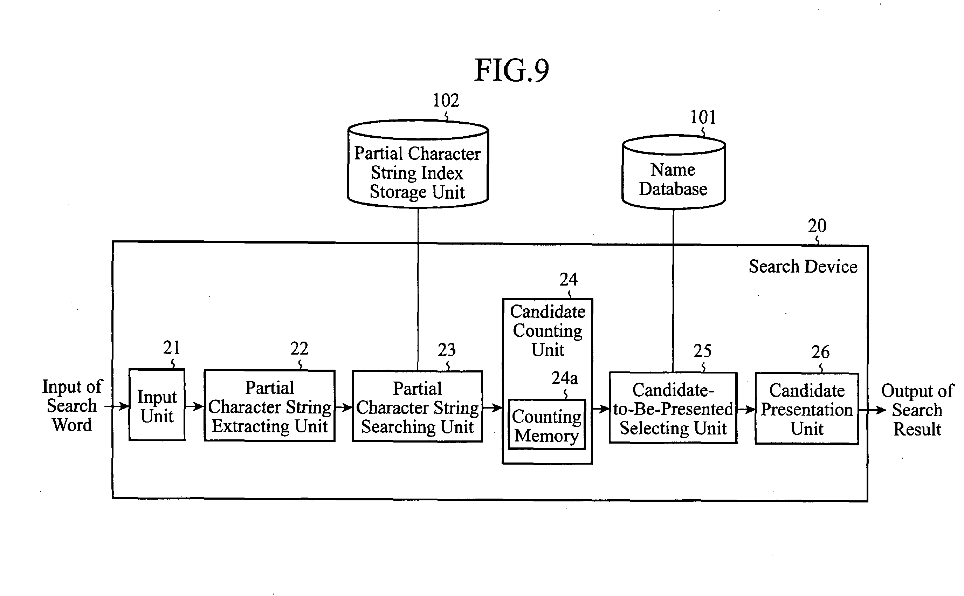

Next, the search device 20 that searches for a search word (a search query) with reference to the partial character string indices created by the index creating device 10 will be explained. Fig. 9 is a block diagram showing the structure of the search device in accordance with Embodiment 1 of the present invention. The search device 20 is comprised of an input unit 21, a partial character string extracting unit 22, a partial character string searching unit 23, a candidate counting unit 24, a candidate-to-be-presented selecting unit 25, and a candidate presentation unit 26.

The input unit 21 accepts an input of a search query from the user. The partial character string extracting unit 22 extracts partial character strings for search from the inputted search query. The partial character string searching unit 23 refers to the partial character string indices stored in the partial character string index storage unit 102 to acquire the name ID/position information lists regarding the partial character strings of the name text candidates corresponding to the partial character strings for search extracted by the partial character string extracting unit 22.

The candidate counting unit 24 has a counting memory 24a for storing the accumulated score (comparison score) of each name ID and the position information which the candidate counting unit has referred to. The candidate counting unit 24 reads the name ID and position information of each of the partial character strings of the name text candidates from the name ID/position information lists inputted from the partial character string searching unit 23, and provides consistency among the appearance positions of the partial character strings on the basis of the above-mentioned position information and the position information about each of the partial character strings for search in such a way that the appearance positions of the partial character strings dot not overlap one another to update the accumulated score stored in the counting memory 24a. The candidate-to-be-presented selecting unit 25 determines the last score of each of the name text candidates according to the accumulated score associated with each of the partial character strings and the position information about each of the partial character strings, and sorts the last scores to determine a higher-ranked candidate to be presented to the user as a search result. The candidate-to-be-presented selecting unit 25 further reads the name text corresponding to the name ID of this higher-ranked candidate from the name database 101, and outputs the name text as a search result name text. The candidate presentation unit 26 presents the search result name text inputted from the candidate-to-be-presented selecting unit 25 to the user.

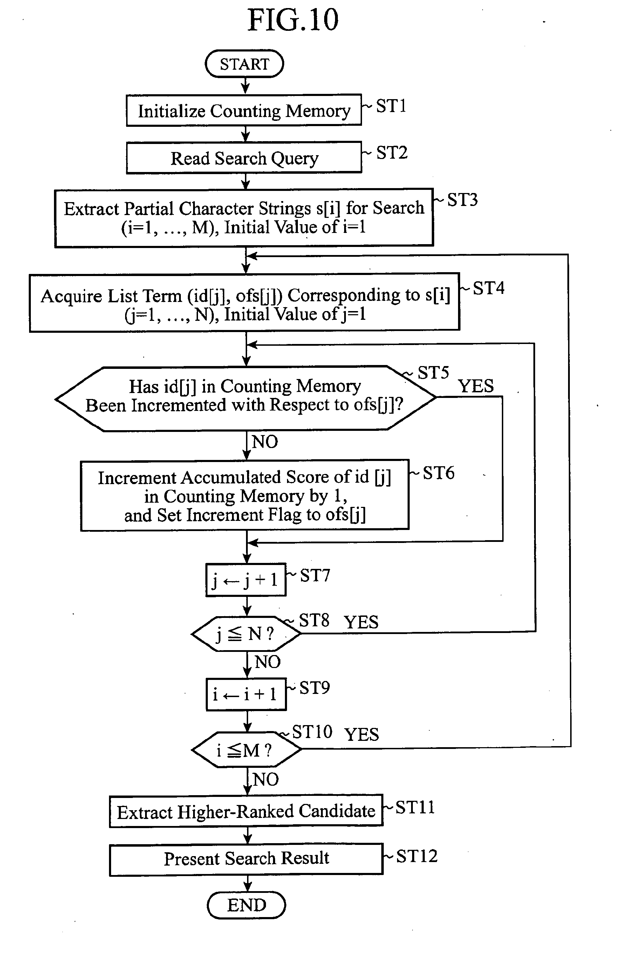

Next, the operation of the search device in accordance with Embodiment 1 of the present invention will be explained. Fig. 10 is a flow chart showing search processing carried out by the search device in accordance with Embodiment 1.
The candidate counting unit 24 initializes the counting memory 24a (step ST1). The input unit 21 reads a search query inputted by the user, and outputs the search query to the partial character string extracting unit 22 (step ST2). The partial character string extracting unit 22 sequentially extracts partial character strings s [i] for search from the search query inputted in step ST2, and outputs the partial character strings for search to the partial character string searching unit 23 (step ST3). In this case, it is assumed that the partial character string extracting unit extracts M partial character strings for search s[1], s[2], ..., and s [M] from the search query. The first one to be extracted of the partial character strings for search is set to s[1], and the initialization for setting i=1 is performed at the time when the partial character string extraction is started.

The partial character string searching unit 23 refers to the partial character string indices stored in the partial character string index storage unit 102 to acquire a name ID/position information list item (id[j], ofs[j]) which corresponds to the partial character string s[i] for search inputted in step ST3 and which is associated with a partial character string of a name text candidate, and then outputs the name ID/position information list to the candidate counting unit 24 (step ST4). A name ID/position information list having a length N is shown by (id[1], ofs [1]), (id[2], ofs [2]), ..., and (id[N], ofs[N]), and id[j] shows the name ID of the j-th name text candidate and ofs [j] shows the appearance position of the partial character string within the j-th name text candidate. The initial value of the list length is set to "1", and the initialization for setting j=1 is carried out at the time when the partial character string search is started.

The candidate counting unit 24 refers to the counting memory 24a to determine whether or not the accumulated score associated with the name ID and position information of the partial character string of the name text candidate, which are inputted in step ST4, has been incremented (step ST5). When, in step ST5, determining that the accumulated score has not been incremented yet with respect to ofs[j], the candidate counting unit increments the accumulated score of id [j] by "1", and sets a flag showing that id[j] of the counting memory has been incremented with respect to ofs[j] in order to prevent any duplicated increment with respect to ofs[j] (step ST6). In contrast, when, in step ST5, determining that the accumulated score has been incremented with respect to ofs [j], the candidate counting unit advances to a process of step ST7.

The candidate counting unit 24 increments "j" showing the j-*th* name ID/position information list item by 1 (step ST7), and then determines whether or not j is equal to or smaller than N (step ST8). When, in step ST8, determining that j is equal to or smaller than N, the candidate counting unit returns to step ST5 and repeats the above-mentioned process on the next name ID/position information list item (i.e., the list item corresponding to j+1). In contrast, when, in step ST8, determining that j is neither equal to nor smaller than N, and the process on all the name ID/position information list items has been completed, the candidate counting unit increments "i" showing the i-th partial character string by 1 (step ST9) and then determines whether or not i is equal to or smaller than M (step ST10). When, in step ST10, determining that i is equal to or smaller than M, the candidate counting unit returns to step ST4, and then repeats the above-mentioned process on the next partial character string (i.e., the partial character string corresponding to i+1).

In contrast, when, in step ST10, determining that i is neither equal to nor smaller than M, and the process on all the partial character strings has been completed, the candidate-to-be-presented selecting unit 25 sorts the accumulated scores of the name IDs and then extracts a higher-ranked candidate to be presented to the user, and also refers to the name database 101 to read the name text corresponding to the name ID of the extracted higher-ranked candidate and then outputs the name text to the candidate presentation unit 26 (step ST11). At this time, the scores can be normalized in consideration of the lengths of the names, the length of the input, the patterns of partial comparisons, etc. The candidate presentation unit 26 presents the name text which is the search result inputted thereto in step ST11 to the user (step ST12).

By carrying out the search processing based on the flow chart of Fig. 10, in the example of the partial character string information shown in Fig. 7, the search device can suppress the increase in the size of the partial character string index storage unit 102 to a two-item increase from five items to seven items while accepting the following two different expressions: " 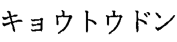 (kyoutoudon)" and " 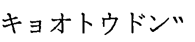 " (kyootoudon)", thereby being able to speed up the search processing.
Furthermore, because the search device counts the accumulated score of each name text candidate according to determination of whether the appearance positions of the partial character strings overlap one another in each name text at the time of the search processing, even when developing the search word into two or more different sets of partial character strings at the time of performing the index creating process, the search device does not count the accumulated scores associated with the partial character strings in each of the two or more different sets duplicatedly, thereby being able to improve the search accuracy. More specifically, when " 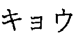 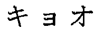 (kyoukyoo)" is inputted in the case of the indices developed as shown in Fig. 7, because a flag is set to ofs [1] when either the accumulated score associated with either " 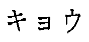 (kyou) " or " 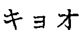 (kyoo)" is incremented, second-time duplicated counting can be avoided.

Next, a process for fuzziness occurring in the establishment of a match between partial character strings of name texts and partial character strings for search will be explained. In the process of step ST5 which is performed by the candidate counting unit 24 in the flow chart of Fig. 10, fuzziness may occur in the establishment of a match between partial character strings of name texts which construct the partial character string index storage unit 102 and partial character strings for search.
More specifically, fuzziness occurs in the establishment of a match between partial character strings of a name text and partial character strings for search when a match of a partial character string for search with a plurality of positions in a partial character string of a name text can be established (a condition A), or when a match of a plurality of partial character strings for search with one position within the positions of partial character strings of a name text can be established (a condition B).

First, the establishment of a match between a partial character string for search and partial character strings of a name text in the case of the condition A will be explained. When the appearance frequency of a partial character string for search in the search query is the same as or higher than that of a partial character string within a name text, a match of the partial character string for search with all the positions of the partial character string of the name text is established.
In contrast, when the appearance frequency of a partial character string for search in the search query is lower than that of a partial character string within a name text, fuzziness occurs in the establishment of a match between the partial character string for search and the positions of the partial character string of the name text. For example, in the character string of a name text of " 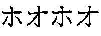 (hoohoo)", a partial character string of " 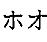 (hoo) having a length of "2" appears twice. Therefore, when the search query is " 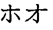 (hoo) ", a match of which one position of the partial character string within the name test with the partial character string of the search query should be established when performing the counting process becomes fuzzy.

Next, in a case in which a match of a plurality of partial character strings for search with only one position within the positions of partial character strings of a name text is established under the condition B, concretely, in a case in which expressions before and behind a lengthening of a diphthong appear in the search query, e.g., in a case in which " 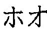 (hoo) " which is the result of a lengthening of a diphthong performed on " 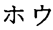 (hou) " is also registered as an index for the same position and the search query is " 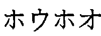 (houhoo)", fuzziness occurs in the establishment of a match between the partial character strings for search and the positions of partial character strings of a name text.

When fuzziness based on one of the above-mentioned conditions A and B occurs, the candidate counting unit 24 can establish a match between partial character strings of a name text and partial character strings for search by using one of a well-known method of determining priorities according to a rule to establish a match according to the priorities (method 1), a well-known method of developing a match candidate for a possible combination (method 2), and a well-known method of determining the establishment of a match according to a match history (method 3). As an alternative, some of these methods can be combined.

According to method 1, an order in which a match is established when fuzziness occurs is predetermined as a rule first. For example, a rule of, when a partial character string appears multiple times within an identical name under the condition A, sequentially establishing a match of the partial character string with a position closer to the head of the name is predetermined. Furthermore, an order in which the counting of the accumulated scores is sequentially performed on each name text candidate with respect to partial character strings under the condition B is predetermined. When a development into entry word partial character strings has a lengthening of a diphthong, the first establishment of a match of a partial character string which is not a long vowel with a partial character string in a name text can prevent a counting error from occurring in the number of matches because the lengthening of a diphthong is one-way conversion from a long vowel to a non-long vowel.

According to method 2, when fuzziness based on the condition A occurs, the search device copies the contents of the counting memory 24a in which the accumulated score of the name ID in question and the position information which the search device has referred to are stored, and computes the accumulated score for each of the plural matches. The search device finally selects one match which provides the largest accumulated score from the plural matches for each name ID.

According to method 3, the position information associated with the score which has been incremented immediately before the occurrence of fuzziness based on the condition A is held in the counting memory 24a for every name ID so as to cancels the fuzziness. The initial value of the position information for every name ID can be set to 0. When a plurality of position information candidates are included for a name ID in question in the partial character string indices stored in the partial character string index storage unit 102, the position which is the closest to "the position information held by the counting memory 24a + 1" is determined as the result of the establishment of a match. As a result, the establishment of a match which gives priority to continuous position information can be carried out.

As mentioned above, because the candidate counting unit 24 according to this Embodiment 1 is constructed in such a way as to carry out a determination of whether the pieces of position information about the partial character strings in each name text candidate overlap one another at the time of the search processing to count the accumulated score of each name text candidate, even when using indices which are created through development into two or more different sets of partial character strings, the candidate counting unit does not count the score duplicatedly for the two or more different sets of partial character strings, thereby being able to improve the search accuracy.

Furthermore, when fuzziness based on one of the above-mentioned conditions A and B occurs, the candidate counting unit 24 according to this Embodiment 1 is constructed in such a way as to determine a match between partial character strings of a name text and partial character strings for search by using the method of determining priorities according to a rule to establish a match according to the priorities (method 1), the method of developing a match candidate for a possible combination (method 2), the method of determining the establishment of a match according to a match history (method 3), or the like, the search accuracy can be further improved.

In addition, according to this Embodiment 1, because the name developing unit 12 for, when the name reading of the search word which is an original expression appearing in the original name database 101 is assumed to have a variant, adding the same position information to the variant of the name reading to create a directed graph which is developed to have two or more paths is disposed, the increase in the size of the partial character string indices can be suppressed and a speedup of the search processing can be implemented.

Furthermore, because the search device according to this Embodiment 1 is constructed in such a way as to refer to the partial character string indices which are created through development of character strings including character strings each of which can be assumed to have a variant name reading into partial character strings so as to search for the search word, the search device can acquire a name text matching the search result in a short time as compared with the case of scanning through the name database itself.

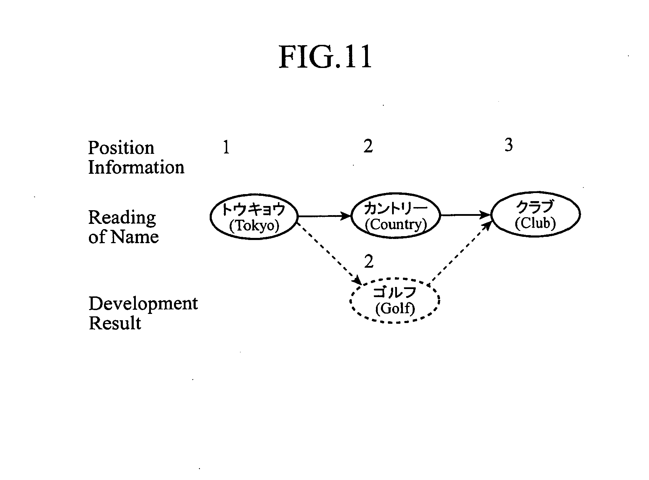

In above-mentioned Embodiment 1, the explanation is made assuming that each partial character string consists of two syllables, though each name text can be processed in units of a morpheme. In this case, not only pronunciation fluctuations but duplication of synonymous word expressions can be absorbed. Fig. 11 is a view showing an example of development into synonymous words in the case of processing each name text in units of a morpheme. As to the following two possible sets of words: 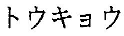 " (Tokyo) 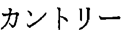 (country) 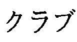 (club)" and " 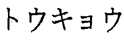 (Tokyo) 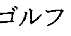 (golf) / 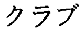 (club) ", this variant can carry out an index creating process and search processing in consideration of the duplication.

### Embodiment 2.

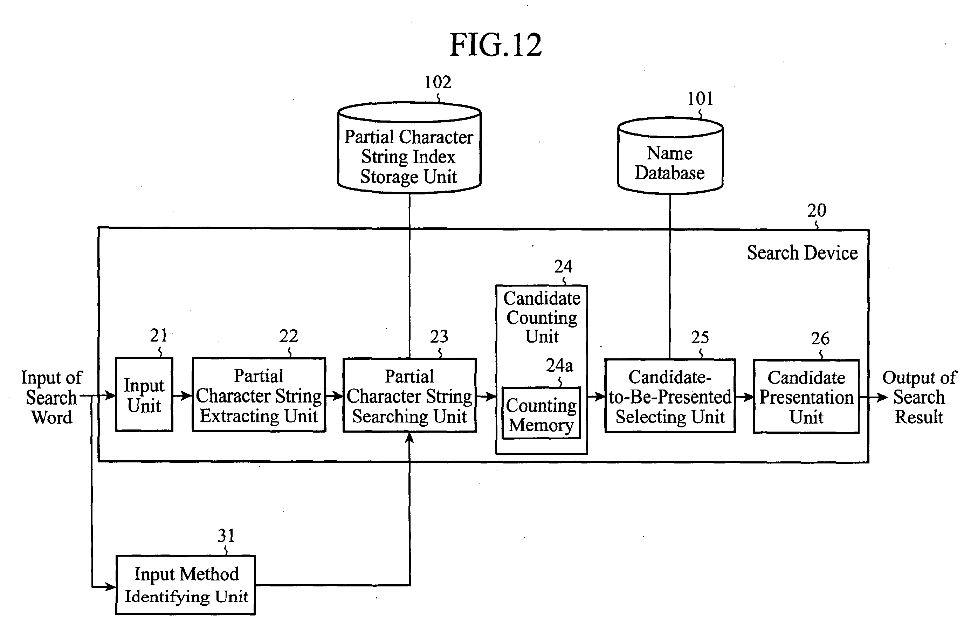

Fig. 12 is a block diagram showing the structure of a search device in accordance with Embodiment 2 of the present invention. The search device in accordance with Embodiment 2 includes an input method identifying unit in addition to the components of the search device in accordance with Embodiment 1. Hereafter, the same components as those of Embodiment 1 are designated by the same reference numerals as those used in Fig. 9, and the explanation of the components will be omitted or simplified.

The input method identifying unit 31 identifies whether an input of a search query to an input unit 21 is a voice and a voice recognition result is inputted to a partial character string searching unit 23, or the input is a keyboard input or the like and a reading of the search query is input directly to the partial character string searching unit 23 just as it is, and outputs the result of the identification to the partial character string searching unit 23.
By thus identifying whether the search query is a voice input or a text input, the search device can determine whether or not to need to carry out a developing process including a lengthening of a diphthong of the reading of the search query. When the search query is a text input, because the reading of the search query is input directly to the partial character string searching unit as a text, the search device does not have to carry out a developing process including a lengthening of a diphthong of the reading of the search query. According to this structure, is constructed in such a way as to distinguish entry words which are added for the case of an input of a voice recognition result from entry words provided for the case of a text input in partial character string indices stored in a partial character string index storage unit 102, and switch between search expressions according to the input method of inputting the search query.

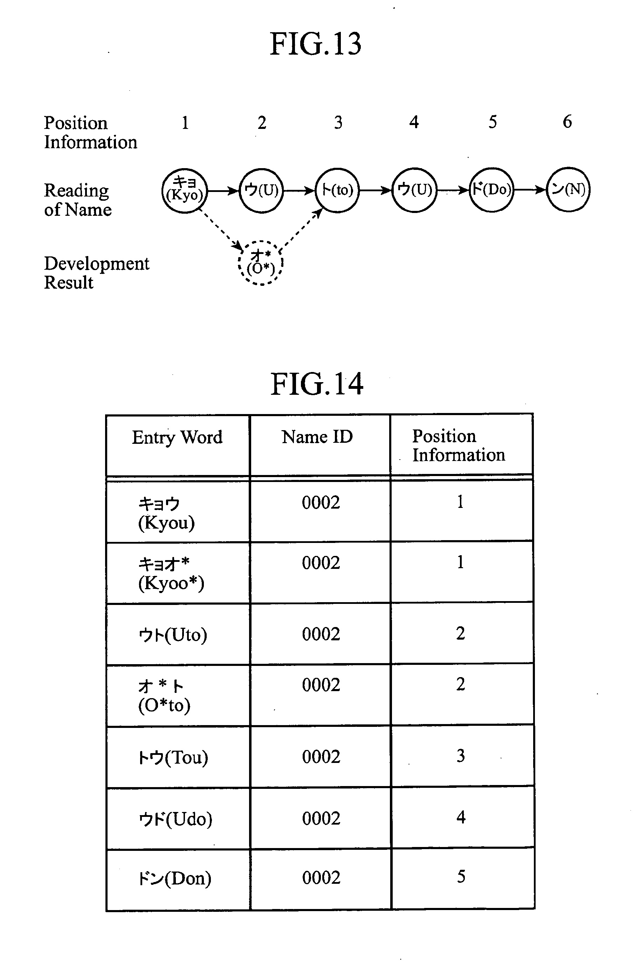

Fig. 13 is a view showing an example of a directed graph which a name developing unit in accordance with Embodiment 2 of the present invention creates. The name developing unit 12 in accordance with Embodiment 2 develops both the reading of the name 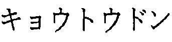 " (kyoutoudon) " in units of syllables and a lengthening of the diphthong of the name to create a directed graph. The portion which is subjected to the lengthening of the diphthong is expressed as " 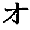 *" to specify that the portion results from the development of the lengthening of the diphthong and the creation.

Fig. 14 shows an example of partial character string information which a partial character string extracting unit creates according to the directed graph of Fig. 13. By referring to the development result of Fig. 13, the partial character string extracting unit decomposes the name " 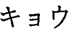 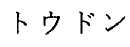 (kyoutoudon)" into partial character strings each having a character string length of "2". An entry word, a name ID (0002 in the example of Fig. 14), and position information showing the position where the entry word appears in the name of each of the partial character strings are shown in Fig. 14. The symbol "*" which shows that the entry word results from the development of the lengthening of the diphthong is added to the entry word just as it is. As a result, in the indices stored in the partial character string index storage unit 102, an entry word which is created from a reading of a name can be distinguished from an entry word which is created from the lengthening of a diphthong of a reading of a name even if the entry words have the same reading.

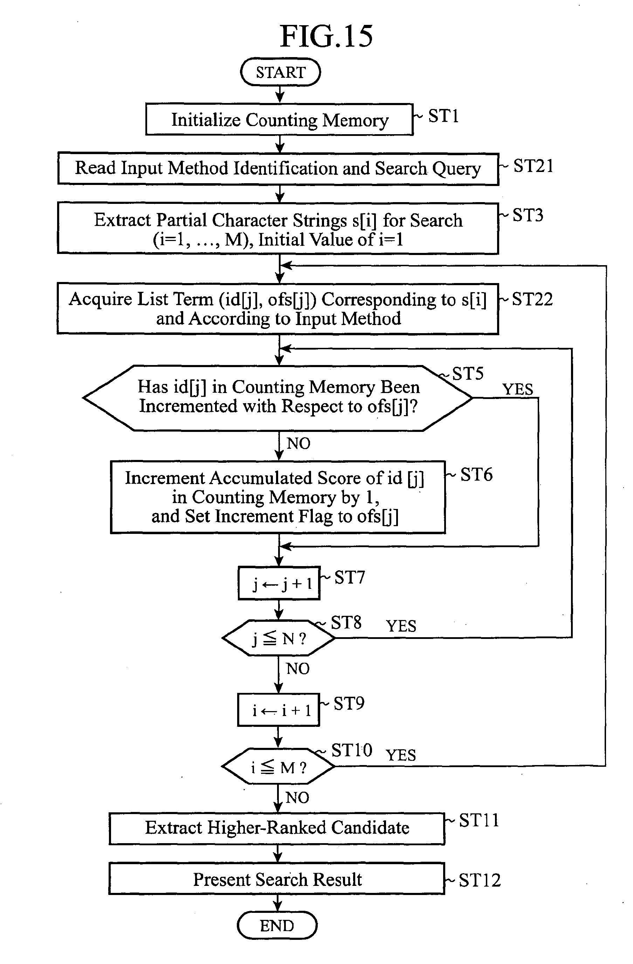

Next, the operation of the search device in accordance with Embodiment 2 of the present invention will be explained. Fig. 15 is a flow chart showing search processing carried out by the search device in accordance with Embodiment 2, and the search processing will be explained hereafter with reference to this flow chart. Steps in which the same processes as those carried out by the search device in accordance with Embodiment 1 are designated by the same reference characters as those used in Fig. 10, and the explanation of the processes will be omitted hereafter.

When a counting memory is initialized in step ST1, the input method identifying unit 31 identifies whether the input of the search query is a voice input or a text input and then outputs the result of the identification to the partial character string searching unit 23, and the input unit 21 reads the search query inputted by the user and outputs the search query to the partial character string extracting unit 22 (step ST21).

The partial character string extracting unit 22 sequentially extracts partial character strings s[i] for search from the search query inputted in step ST2, and outputs the partial character strings for search to the partial character string searching unit 23 (step ST3). In this case, it is assumed that the partial character string extracting unit extracts M partial character strings for search s[1], s[2], ..., and s [M] from the search query. The first one to be extracted of the partial character strings for search is set to S[1], and the initialization for setting i=1 is performed at the time when the partial character string extraction is started.

The partial character string searching unit 23 acquires a name ID/position information list item (id [j], ofs [j]) which corresponds to the partial character string s[i] for search inputted, in step ST3, from the partial character string extracting unit 22, and the input method of inputting the search query which is the identification result inputted, in step ST21, from the input method identification unit 31, and which is associated with a partial character string of a name text candidate, and then outputs the name ID/position information list to a candidate counting unit 24 (step ST22). In this case, the length of the index list is "N". The initialization for setting j=1 is carried out at the time when the partial character string search is started.
When the search query is a voice input in step ST22, the partial character string searching unit adds and refers to an entry word which is the result of development of the reading of the search query (in the example of Fig. 14, " 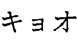 (kyoo)" -> " 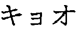 (kyoo*)"). In contrast, when the search query is a text input, the partial character string searching unit refers to only the entry words which are the partial character strings of the search query without reflecting any development results in the entry words.

The candidate counting unit 24 refers to the counting memory 24a to determine whether or not the accumulated score associated with the name ID and position information of the partial character string of the name text candidate, which are inputted in step ST22, has been incremented (step ST5). After that, the search device carries out the same processes as those in steps ST6 to ST12 explained in Embodiment 1, and then outputs the search result.

As mentioned above, according to this Embodiment 2, the input method identifying unit 31 for identifying the input method of inputting the search word is disposed, the index creating device 10 is constructed in such a way as to create indices which make it possible to identify the input method by attaching an identifier to the indices at the time of creating the indices, and the partial character string searching unit 23 is constructed in such a way as to develop the search word into the entry words of partial character strings which the partial character string searching unit refers to according to the input method identified by the input method identifying unit 31, the descriptions of the partial character string indices can be made to be equivalent to those in the case in which the entry words are created through the development, except for the increase in the entry words which is caused by the development, and the total size of the partial character string index file can be reduced as compared with a case in which two sets of partial character string indices are created according to the two different input methods.

Furthermore, according to this Embodiment 2, because the search device is constructed in such a way as to distinguish the name reading of the search word which is an original expression appearing in the original name database 101 from the development result which is an additional expression added at the time of creating the partial character string indices, the search device can compare the partial character string indices of the name reading of the search word first with the partial character string index storage unit at the time of performing the search processing, and then compare the partial character string indices of the development result with the partial character string index storage unit. Therefore, the search device can carry out the comparing process while giving priority to a match of the name reading of the search word which is an original expression.

### Industrial Applicability

As mentioned above, the present invention can be applied widely to a search device that displays a high-precision search result for a search word input having fuzziness, a search index creating device that can reduce the size of an index file which the search device refers to when making a search for the search word, and a search system having the search device and the search index creating device.

## Claims

1. A search device comprising:
an input unit for acquiring a search query;
a partial character string extracting unit for acquiring partial character strings for search from said search query;
a partial character string searching unit for acquiring name text candidates and pieces of partial character string appearance position information respectively showing appearance positions of the partial character strings within said name text candidates according to said partial character strings for search;
a candidate counting unit for counting an accumulated score for each of said name text candidates by providing consistency among the appearance positions of said partial character strings within said name text candidates in consideration of said pieces of partial character string appearance position information in such a way that the appearance positions do not overlap one another in each of said name text candidates;
a candidate-to-be-presented selecting unit for determining a candidate to be presented according to said accumulated score; and
a candidate presentation unit for presenting said candidate to be presented.

2. The search device according to claim 1, wherein the search device includes an input method identifying unit of identifying an input method of inputting the search query, and the partial character string searching unit acquires the name text candidates and the pieces of partial character string appearance position information respectively showing the appearance positions of the partial character strings within said name text candidates according to the identified input method and the partial character strings for search.

3. The search device according to claim 1, wherein when fuzziness exists in matching of the partial character strings of the search query with the partial character strings of the name text candidates, the candidate counting unit uses at least one of a method of making comparisons in a predetermined comparison order, a method of creating another match candidate for each of the candidates, and a method of determining a match relationship according to a match history.

4. The search device according to claim 2, wherein when fuzziness exists in matching of the partial character strings of the search query with the partial character strings of the name text candidates, the candidate counting unit uses at least one of a method of making comparisons in a predetermined comparison order, a method of creating another match candidate for each of the candidates, and a method of determining a match relationship according to a match history.

5. A search index creating device comprising:
a name developing unit for analyzing a name text and, when an input is assumed to have a name variant, developing the input into two or more paths to which same position information is added to create an input expression graph;
a partial character string extracting unit for acquiring partial character strings and pieces of appearance position information from the name text developed; and
a partial character string sorting unit for sorting said partial character strings, said name text, and said pieces of appearance position information to create partial character string indices which are for a search for a name text.

6. The search index creating device according to claim 5 wherein when the input has a name variant, the name developing unit adds a symbol showing that the input has a name variant.

7. A search system comprising:
a search device according to claim 1;
a search index creating device according to claim 5; and
a partial character string index storage unit for storing a name database for storing name texts, and the partial character string indices created by said search index creating device.
